**Europäisches Patentamt**

**European Patent Office**

**Office européen des brevets**

(19)

(11) Veröffentlichungsnummer: **0 126 714**
A2

# (12) EUROPÄISCHE PATENTANMELDUNG

(21) Anmeldenummer: 84810237.2

(22) Anmeldetag: 15.05.84

(51) Int. Cl.³: **B 01 D 13/00**, C 02 F 1/44

---

(30) Priorität: 20.05.83 CH 2789/83

(43) Veröffentlichungstag der Anmeldung: 28.11.84
Patentblatt 84/48

(84) Benannte Vertragsstaaten: **AT BE CH DE FR GB IT LI LU NL SE**

(71) Anmelder: **Christ AG, Hauptstrasse 192, CH-4147 Aesch (CH)**

(72) Erfinder: **Uebersax, Heinz, Rotbergstrasse 9, CH-4114 Hofstetten (CH)**

(74) Vertreter: **Braun, André et al, A. Braun, Braun, Héritier, Eschmann AG Patentanwälte Holbeinstrasse 36-38, CH-4051 Basel (CH)**

---

(54) Verfahren und Vorrichtung zur Behandlung von Lösungen mittels Gegenosmose.

(57) Bei dem Verfahren zur Trennung einer Lösung mittels Gegenosmose werden auf seiten der konzentrierteren Lösung stattfindenden Ausfällungen und Ablagerungen löslicher Stoffe während einer Prozessphase vorbestimmter Dauer gestattet, und die dann vorhandenen Ausfällungen und Ablagerungen werden in einer Spülphase durch eine Spülung mit einer Spüllösung zum grössten Teil wieder aufgelöst. Mit diesem Verfahren ist es möglich, permanente Ablagerung solcher Stoffe in den Gegenosmoseelementen zu verhindern, ohne dass dafür Chemikalien verwendet werden müssen.

Die dieses Verfahren realisierende Vorrichtung besitzt eine Spülleitungsanordnung (8), um die Spüllösung während der Spülphase aus einem Vorrat (9) in die die solutenthaltende Lösung aufnehmende Kammer (3) einer Gegenosmoseanlage einzuleiten. Für eine Mengen- und Druckdosierung der Spüllösung ist ein Förder- und Dosieraggregat (10) vorgesehen. Zur Ansteuerung der verschiedenen Förder- und Steuermittel und damit zur Umschaltung von einer Prozessphase in die jeweilige Spülphase dient eine Steuer- und Regelungsanordnung (11).

# Verfahren und Vorrichtung zur Behandlung von Lösungen mittels Gegenosmose

Die Erfindung bezieht sich auf ein Verfahren zur Trennung einer solutenthaltenden Lösung, insbesondere ohne konstante chemische Vorbehandlung mittels Gegenosmose in ein solutreiches Konzentrat und ein solutarmes Lösungsmittel und dabei vor allem auf eine Behandlung von Störsubstanzen, wie Ausfällungen und Ablagerungen löslicher Stoffe aus derartigen Lösungen sowie auf eine Vorrichtung zur Durchführung des Verfahrens.

Die Gegenosmose ist ein weltweit angewandter Trennungsprozess, der die Aufteilung eines soluthaltigen Flüssigkeitsstromes in solutarmes Lösungsmittel und ein solutreiches Konzentrat ermöglicht, indem das Lösungsmittel unter einem Druck, der grösser sein muss als der osmotische Druck des Systems, durch eine semipermeable, nur für das Lösungsmittel durchlässige Membrane gedrückt wird. Dieses Verfahren wird in grossem Umfang zur Entsalzung von Trinkwasser, Brackwasser und Meerwasser eingesetzt sowie für eine ganze Reihe anderer Lösungen in mannigfachen Bereichen von Forschung, Industrie und Technik. Solange in dem aufzubereitenden Flüssigkeitsstrom nur geringe Spuren an Schwebestoffen vorhanden sind und die Löslichkeit der Solute nicht überschritten wird, zeichnet sich dieser Prozess durch Einfachheit und Wirtschaftlichkeit aus. In vielen Lösungen aber, insbesondere natürlichen Ursprungs, oder in Abwässern oder Prozesslösungen liegen Substanzen jedoch in solchen Konzentrationen vor, dass oft selbst bei geringer Aufkonzentrierung Ausfällungen auftreten, die sich auf der Membranoberfläche festsetzen und nicht nur die richtige Funktion der Vorrichtung stören, sondern diese oft irreversibel verschmutzen und zerstören. Diesen unerwünschten Nebenerscheinungen wird in der Praxis durch eine ganze Reihe von Schritten begegnet, die sich alle dadurch auszeichnen, dass relativ grosse Mengen an Chemikalien entweder zur Umwandlung, zur Sequesterierung oder zur Eliminierung der Störsubstanzen eingesetzt werden müssen.

- 3 -

Um zu verhindern, dass übersättigte Lösungen auf Gegenosmose-Membranen unerwünschte Ausfällungen verursachen, werden heute vorwiegend folgende Techniken verwendet:

- Die störende Komponente, z.B. gelöste Kieselsäure in nicht-ionogener Form, wird in einer Vorbehandlung durch Absorption und Fällung entfernt. Ein weiteres Beispiel für dieses Vorgehen ist die Enthärtung von Wasser, wobei mittels Ionenaustauschern in der Natriumform die Härtebestandteile, insbesondere Calcium, entfernt werden, so dass bei einer Aufkonzentrierung des Wassers im Gegenosmose-Element keine Ausfällungen von Calciumcarbonat oder Calciumsulfat bzw. ähnlichen Salzen der anderen Erdalkalimetalle entstehen können. Durch die Enthärtung werden alle Härtebildner gegen Natrium ausgetauscht, wobei der Enthärter nach der Erschöpfung mit einem ca. zweifachen Ueberschuss an Regeneriermitteln wieder in die Natriumform zurückgebracht werden muss.

- Das am häufigsten zu Problemen Anlass gebende schwerlösliche Salz ist das Calciumcarbonat. Durch Zugabe einer stärkeren Säure, wie Schwefelsäure oder Salzsäure, können Carbonate in freie Kohlensäure und das entsprechende Salz der zugefügten Mineralsäure umgewandelt werden.

Da das Sulfat und insbesondere das Chlorid des Calciums wesentlich besser löslich sind als das Carbonat, kann eine wesentlich höhere Eindickung vorgenommen werden. Nachteilig ist dabei, dass zusätzliche Ionen zugefügt werden, und dass der pH-Wert des Konzentrates und des Produktwassers abgesenkt werden. Die zugefügten

- 4 -

Säuremengen müssen zudem proportional dem Bicarbonatgehalt des aufbereiteten Wassers und der Reinwassermenge sein.

- Bei der Kristallisation schwerlöslischer Stoffe entstehen zuerst Kristallkeime, an die sich weitere
Ionen oder Moleküle in geordneter Art und Weise anlagern. Werden die Kristalle gross genug, so stören
sie den Betrieb der Gegenosmose-Anlage. Durch die Zugabe geeigneter Substanzen, die eine Affinität für
Kristallgitterplätze aufweisen, kann das Wachstum
derartiger Kristalle gehemmt und zeitweise verhindert
werden. Typische Stoffe, die schwerlösliche Substanzen wie Sulfate und Carbonate der Erdalkalimetalle
am Wachstum hindern, sind anorganische Polyphosphate,
Organophosphorverbindungen, Polycarbonsäuren, Polysulfonsäuren usw. Weil die eingesetzten Chemikalien
nur in recht geringen Mengen, in Konzentrationen von
1 bis 20 $g/m3$ eingesetzt werden, ist insbesondere bei
Stillständen und bei Anwesenheit bestimmter Störsubstanzen die Härtestabilisierung nicht gesichert.

In der Praxis werden aus Sicherheitsgründen oft die
Enthärtung und die Härtestabilisierung oder die Säure-
Dosierung und die Härtestabilisierung zusammen kombiniert,
um eine Zerstörung der Gegenosmose-Elemente sicher zu
verhindern.

Diese Techniken sind einerseits kostspielig und verursachen
oft unerwünschte Nebenprobleme, wie die Belastung von Abwässern mit Schadstoffen, und führen andererseits in Gebieten, wo derartige Substanzen nicht in grossen Mengen verfügbar sind, zu Versorgungsengpässen. Es ist deshalb der
Zweck dieser Erfindung, den Einsatz von Chemikalien stark zu reduzieren und wenn möglich, auf Chemikalienzusätze völlig zu verzichten.

Die erfindungsgemäße Aufgabe besteht nun darin, bei einem Verfahren der eingangs genannten Art mit möglichst einfachen technischen Mitteln zu realisierende Maßnahmen vorzusehen, mit welchen die während eines Trennungsprozesses durch Gegenosmose auftretenden Ausfällungen und Ablagerungen derart behandelt werden, daß ein langfristig störungsfreier Trennungsprozeß sichergestellt werden kann; ferner soll eine konstruktiv möglichst einfache, funktionssicher und wirtschaftlich arbeitende Vorrichtung zur Durchführung eines solchen Verfahrens geschaffen werden.

Die erfindungsgemäße Lösung besteht bei dem Verfahren darin, daß ein im Verlauf des Trennungsprozesses auf seiten der solutenthaltenden Lösung bzw. des solutreichen Konzentrats stattfindendes Ausfällen und Ablagern löslicher Stoffe während einer Prozeßphase vorbestimmter Dauer gestattet wird und daß die dann vorhandenen Ausfällungen und Ablagerungen in einer Spülphase durch eine Spülung mit einer Spüllösung zumindest größtenteils aufgelöst werden.

Bei diesem erfindungsgemäßen Verfahren wird ein grundlegend anderer Weg eingeschlagen als bei sämtlichen Behandlungsarten solutenthaltender Lösungen, die einer chemischen Vorbehandlung unterzogen werden oder bei denen Lösungsmittelzusätze in die solutreiche Lösung eingebracht werden, um die Bildung von Ausfällungen von vorneherein zumindest einzudämmen. Die dem erfindungsgemäßen Verfahren zugrundeliegende Lösungsidee knüpft an die bei derartigen Verfahrensabläufen gewonnene Einsicht an, daß eine Bildung von Ausfällungen und Störsubstanzen auf seiten der solutreichen Lösung eigentlich niemals sicher mit noch so großem chemischen und verfahrenstechnischen Aufwand verhindert werden kann. Ferner wurde bei dem erfindungsgemäßen Verfahren berücksichtigt, daß bei gewissen Anteilen von gelösten und ungelösten Stoffen in einer Lösung Ausfällungen und Ablagerungen nicht schlagartig stattfinden, sondern daß diese Vorgänge einer bestimmten Dynamik folgen. Die Ablagerung von Ionen der Störsubstanzen muss nämlich unter Bildung von Kristallkeimen und/oder an vorliegenden Kristallgittern stattfinden, wozu eine gewisse Zeit erforderlich ist. Schließlich macht sich das erfindungsgemässe Verfahren noch die Tatsache zunutze, daß frisch ausgefällte und abgelagerte Kristallkeime, die sehr klein sind, im Verhältnis zu ihrem Volumen eine sehr große Oberfläche aufweisen, während bei älteren Ablagerungen die Angriffsfläche für eine Spülung nach einer bestimmten Prozeßdauer erheblich abgenommen hat. Die erfindungsgemäße Lösung in der in den Patentansprüchen definierten Form zeichnet sich somit durch das Verfahrensprinzip aus, Ausfällungen und Ablagerungen löslicher Stoffe in einem bestimmten Umfang zu gestatten und dann, solange die Ausfällungen und Ablagerungen relativ leicht wieder aufgelöst werden können, dies mittels einer Spüllösung in einer Spülphase vorzunehmen. Allgemeiner gefaßt lautet dieses Prinzip des erfindungsgemäßen Verfahrens: Es sollen für eine bestimmte Zeitspanne ausfällende bzw. ablagernde Prozeßzustände zugelassen und während einer weiteren Zeitspanne sollen auflösende Zustände geschaffen werden, um zu erreichen, daß sich beide Zustände so ergänzen, daß über die gesamte Prozeßdauer im wesentlichen ein konstanter Ablauf gewährleistet ist, der eine irreversible Verfestigung von Ablagerungen an den an der Gegenosmose beteiligten Elementen nicht aufkommen läßt.

Etwas konkreter auf die bei einer Gegenosmose verwendeten Elemente lassen sich die beim erfindungsgemäßen Verfahren auftretenden Effekte auch noch so erklären, daß
während der Prozeßphase wohl Ausfällungen entstehen und
sich an der Membranoberfläche festsetzen, daß die übersättigte solutreiche Lösung jedoch nicht alle überschüssigen Salze quantitativ sondern nur bruchteilhaft ausscheidet, und daß mit Beginn der Spülung die aktive Oberfläche der Ausfällung, wie gesagt, im Verhältnis zur gesamten Volumenmenge so groß ist, daß sich diese Ausfällungen in der Spüllösung schnell auflösen können. Da die
für das erfindungsgemäße Verfahren zum Einsatz kommenden
Gegenosmoseelemente bekannte Spezifikationen erfüllen,
läßt sich für jedes gegebene Element unter Berücksichtigung von Merkmalen der solutreichen Lösung die Dauer der
Prozeßphase ermitteln und dementsprechend   die Dauer
der Spülphase festlegen.

Das erfindungsgemäße Verfahren kennzeichnet Verfahrensmaßnahmen zur Trennung einer solutenthaltenden Lösung mittels
Gegenosmose in ein solutreiches Konzentrat und ein solutarmes Lösungsmittel, insbesondere ohne konstante chemiche Vorbehandlung.   Mit diesem Verfahrenskomplex ist
prozeßbedingt ein weiterer Verfahrensaspekt verknüpft,
nämlich die Behandlung von Störsubstanzen, wie Ausfällung
löslicher Stoffe aus Lösungen. Da zur Trennung einer solutenthaltenden Lösung auch die Aufbereitung von Rohwasser im
weitesten Sinne gehört, betrifft die Erfindung auch ein
Verfahren zur Aufbereitung von Rohwasser, wie Abwasser,
Brackwasser, Meerwasser und dgl. zu Trinkwasser, wiederverwendbarem Prozeßwasser und dgl. mittels Gegenosmose.

Die nach dem erfindungsgemäßen Verfahren vorgesehene Spülphase kann im Verhältnis zur Prozeßphase unterschiedlich
betrieben werden. Sie kann in den fortlaufenden Trennungsprozeß integriert sein, beispielsweise durch periodisches Zuschalten von solutarmem Lösungsmittel und Verdünnung der solutreichen Lösung für die Dauer der Spülphase, so daß im Vergleich zur Prozeßphase auflösende Zustände eingestellt werden. Auch wäre es möglich, für die Dauer der Spülphase den Trennungsprozeß zu unterbrechen und gegebenenfalls die solutenthaltende Lösung bzw. das solutreiche Konzentrat durch die zugeführte Spüllösung zu verdrängen.

Je nach zum Einsatz kommender Membranart, die als semipermeable, in einer Richtung durchlässige Membran ausgeführt sein kann oder als eine symmetrische homogene Membran, welche in beiden Richtungen durchströmt werden kann, bestimmt sich die Strömungsrichtung der Spüllösung, die bei der semipermeablen Membran ihre auflösende Wirkung ausübt bei einer Spülung, die in der gleichen Strömungsrichtung verläuft, wie die der solutenthaltenden Lösung. Eine symmetrische, homogene Membran hingegen kann sowohl in Strömungsrichtung der solutreichen Lösung als auch im Gegenstrom dazu betrieben werden.

Als Spüllösungen kommen sämtliche geeignete Lösungen in Frage, insbesondere jedoch der Flüssigkeitsstrom, das solutarme resp. reine Lösungsmittel oder das solutreiche Konzentrat.

0126714

- 9 -

Zudem ist es möglich, während den gegebenenfalls in relativ kurzen Intervallen erfolgenden Spülphasen geringe Mengen von Zusätzen einzusetzen, oder mit höherer Temperatur als üblich zu spülen, um die Reinigung der Membrane zu beschleunigen oder zu vervollständigen. Als Zusätze zur pH-Senkung oder Erhöhung können anorganische und organische Säuren und Basen wie Salzsäure, Schwefelsäure, Salpetersäure, Kohlensäure, Sulfaminsäure, Zitronensäure, Ascorbinsäure, Oxalsäure, Natriumhydroxid, Kaliumhydroxid, Ammoniak, als Sequestriermittel und/oder Komplexbildner Hexametaphosphate, Tripolyphosphate, Polyacrylate, Polycarbonsäuren und deren Salze, Organophosphorsäuren und Salze, EDTA, Detergentien, Dispergiermittel, Emulgatoren und/oder enzymatische Abbauvermittler wie sie in Biz, Ariel, Nutek NT 600, Decon 90, enthalten sind, Desinfektionsmittel und/oder Biostatica, wie Formaldehyd, Natrium-meta-bisulfit, Wasserstoffperoxyd, Jod, Chlor, Brom, Chlordioxid, Silberionen, Kupferionen, Filmbildner, wie Tanninsäure, Polyvinylmethyläther und/oder organische Lösungsmittel, wie Alkanole, Ketone, Ester in monomerer oder polymerer Form eingesetzt werden.

Ein weiterer Vorteil der Erfindung besteht darin, dass man die kurzzeitig verwendeten Zusätze in viel höheren Konzentrationen zugeben kann als dies bei üblichen Verfahren der Fall ist.

Ein weiterer Vorteil des erfindungsgemässen Verfahrens besteht darin, dass man die Lösekraft der Spüllösung dadurch erhöhen kann, dass man diese vorgängig ihrer Verwendung mindestens teilweise einem Ionenaustausch unterwirft, wel-

cher der Enthärtung, Entkationisierung oder Entsalzung dient. Leitet man die Spüllösung mindestens teilweise durch ein mit Protonen beladenes Ionenaustauschharzbett, so kann man dieses während der Arbeitsphase mit Säure oder elektrolytisch mit geringerem Energiebedarf regenerieren.

Das erfindungsgemässe Verfahren lässt sich demnach in jedem Bereich der Gegenosmose-Technik einsetzen, insbesondere wenn es darum geht, Lösungen zu behandeln, die durch die laufende Zugabe von Stabilisierungsmitteln irgendwelcher Art ungünstig verändert würden.

## Beispiel 1

Ein Brunnenwasser, enthaltend 6 val/m3 Bicarbonat, 1 val/m3 Chlorid und Sulfat sowie 4,5 val/m3 Calcium und 0,5 val/m3 Magnesium und 2 val/m3 Natrium soll mittels Gegenosmose mit einer Ausbeute von 75 % entsalzt werden. Ueblicherweise ist für diese Aufgabe ohne Zugabe zusätzlicher Stabilisierungsmittel die Zugabe von 4,5 val/m3 Salzsäure oder Schwefelsäure notwendig. Durch Zugabe eines Stabilisierungsmittels kann diese Menge um 15 bis 25 % gesenkt werden. Das derart vorbehandelte und mittels Gegenosmose entsalzte Wasser enhält, je nach Membrantyp, nach der Behandlung noch ca. 0,5 bis 1 val/m3 Restsalze und ca. 200 $g/m^3$ freie Kohlensäure. Wird die Anlage aber ohne Zugabe von Zusätzen betrieben, dafür aber in Intervallen von 0,5 bis 5 Stunden während 3 bis 30 Minuten mit Reinwasser gespült, so kann die Anlage betrieben werden, ohne dass schädliche Ausfällungen auftreten und ohne dass grosse Mengen durch Säurezugabe freigesetzte Kohlensäure ins Produktwasser gelangen. Das produzierte Wasser enthält dann ca. 0,3 bis 0,8 val/m3 Restsalze und gleichviel $CO_2$ wie das unbehandelte Rohwasser.

Beispiel 2

Die Verarbeitung eines silikathaltigen Grundwassers mit einem $SiO_2$-Gehalt von 50 g/m3 und einem pH-Wert von 7,1 führt bei einer Eindickung um den Faktor 4 bei einer Temperatur von 10 °C zu Ausfällungen von Kieselsäure auf die Membrane, die bei länger dauerndem Betrieb zu einer irreversiblen Verschmutzung führen. Wird aber in Intervallen von 1 bis 10 Stunden während 10 bis 100 Minuten mit einem salzarmen Produktwasser gespült, dessen Temperatur auf ca. 40 °C angehoben wird und das einen pH-Wert von ca. 11 aufweist, so kann die Anlage ohne Behandlung des Rohwassers betrieben werden, ohne dass die Membrane durch Ausfällungen beschädigt wird.

Beispiel 3

Das in Beispiel 1 erwähnte Brunnenwasser wird erfindungsgemäss ohne Säuredosierung durch die Gegenosmose-Anlage verarbeitet. Nach Ablauf eines Intervalls von 2 bis 8 Stunden wird während 2 bis 20 Minuten eine Säuremenge entsprechend oder grösser der Bicarbonatmenge im Rohwasser zudosiert. Durch dieses Vorgehen kann die Anlage frei von Calciumcarbonatausfällungen betrieben werden.

Beispiel 4

Ca. 5 %ige Lactoselösung aus der Milch- oder Molkeaufbereitung kann durch Gegenosmose bis zur Sättigung aufkonzentriert werden. Wird der Sättigungspunkt überschritten, so kann durch Abkühlen des Konzentrates ein Teil des Zuckers gezielt kristallisiert werden. Durch nochmaliges Erwärmen lässt sich die Mutterlösung in der Gegenosmoseanlage noch einmal einengen. Da immer nahe der Sättigungsgrenze gearbeitet wird, besteht die Gefahr von Ausfällungen auf die Membrane. Wird aber die Membrane nach Arbeitsphasen von 1 bis 10 Stunden während 5

-12-

bis 50 Minuten mit von der Lactose befreitem Produktwasser gespült, so kann ohne gravierende Verschmutzungserscheinungen gearbeitet werden.

Beispiel 5

Das in Beispiel 1 beschriebene Brunnenwasser wird völlig
ohne Säuredosierung mittels Gegenosmose nach dem erfindungsgemäßen Verfahren verarbeitet. Das dabei gewonnene
Reinwasser wird nun nicht direkt seiner verbrauchsgemäßen
Bestimmung zugeführt, sondern entweder unmittelbar,ohne
Erhöhung des abflußseitigen Drucks,oder nach einer Druckerhöhung  rohwasser- bzw. konzentratseitig einem Gegenosmoseanlage  nach beendeter  Prozeßphase zugeleitet, womit
die Spülphase eingeleitet wird. Dazu sind ersichtlicherweise
mindestens zwei Gegenosmoseelemente in der Weise zusammengefaßt,  daß während einer Prozeßphase in einem Element eine Spülphase in dem anderen Element stattfindet
und umgekehrt. Während also in der Prozeßphase im  einen
Element  im Verlauf der Trennung Ausfällungen und Ablagerungen gestattet werden, lassen sich im anderen Element die geringen vorhandenen Mengen solcher Ausfällungen
und Ablagerungen wieder auflösen, ohne daß das als Spüllösung verwendete Reinwasser merklich aufgesalzt wird,
da der weitaus größte Salzgehalt bereits über den Konzentratabfluß,der während der Prozeßphase stattfindet, ableitet wurde. Nach 0,1 bis 10 Stunden werden die beiden
Elemente umgeschaltet, so daß das zuvor gereinigte Element  nun unter Zufuhr von Rohwasser unter hohem Druck
Reinwasser produziert,  welches nun,wie beschrieben,zur
Reinigung bzw. Spülung der mit Ausfällungen und Ablagerungen versehenen Elements verwendet wird.
Eine wechselweise Schaltung in dieser Kombination läßt eine hohe Auflösungsrate erzielen, ohne daß eine Zugabe von Chemikalien notwendig ist.

Eine erfindungsgemäße Vorrichtung zur Durchführung des Verfahrens nach der Erfindung umfaßt bekannte Elemente von Gegenosmoseanlagen, wie mindestens ein Druckgefäß mit einer seinen Gefäßinnenraum unterteilenden semipermeablen Membran zur Bildung einer ersten Kammer für eine solutenthaltende Lösung bzw. ein Konzentrat dieser Lösung sowie einer zweiten Kammer für solutarmes Lösungsmittel, wobei die Membran von der ersten zur zweiten Kammer durchlässig ist, ferner eine an die erste Kammer angeschlossene Fördereinrichtung zur Zufuhr solutenthaltender Lösung unter einem vorbestimmten Druck und einen aus dieser ersten Kammer herausgeführten Konzentratabfluß sowie eine Abflußleitung für solutarmes Lösungsmittel an der zweiten Kammer. Erfindungsgemäß ist nun eine in die erste Kammer einmündende Spülleitungsanordnung vorgesehen, mittels welcher die genannte Spüllösung während der Spülphase aus einem Spüllösungsvorrat in die erste Kammer einleitbar ist; ferner ist in der Spülleitungsanordnung ein Förder- und Dosieraggregat zur Mengen- und Druckdosierung der einzuleitenden Spüllösung angeordnet,und eine Steuer- und Regelungsanordnung steht zumindest mit dem Förder- und Dosieraggregat in Verbindung, um die Einstellung der Dauer und gegebenenfalls des Intervalls der Spülphase in Relation zu sonstigen genannten Verfahrensabläufen vorzunehmen. Mit dieser erfindungsgemäßen Vorrichtung kann über die Spülleitungsanordnung, durch die an die erste Kammer angeschlossene Fördereinrichtung bei weitergeführtem, reduziertem oder abgeschaltetem Prozeßablauf eine dosierte Menge einer Spüllösung für eine bestimmte Zeit eingebracht und dadurch auflösende Zustände am Membranelement geschaffen werden. Gewünsch-

-14-

tenfalls kann die Steuer- und Regelungsanordnung
den Betrieb der Vorrichtung so schalten, daß mit Beginn
der Spülphase über den Konzentratabfluß oder eine separate steuermittelbetätigte Austrittsleitung solutreiche
Lösung aus der ersten Kammer verdrängt wird.

In manchen Einsatzfällen, beispielsweise bei der Aufbereitung von Rohwasser zu Trinkwasser kann das solutarme Reinwasser aus der zweiten Kammer direkt oder nach
einer Druckerhöhung als Spüllösung der ersten Kammer
zugeführt werden. Für eine solche Variante kann die
Spülleitung so ausgeführt sein, daß sie, ausgestattet
mit einem Förder- und Dosieraggregat, die semipermeable
Membran außerhalb der Druckkammer umgeht, so daß zwischen den beiden Kammern eine Verbindungsleitung besteht, deren Durchflußmenge und -druck über die genannte Steuer- und Regelungsanordnung verstellbar ist. Falls
erforderlich, kann an die Spülleitung eine Dosiereinrichtung für Spüllösungszusätze angeschlossen sein, um
beispielsweise in großen Intervallen nach einer Reihe
von Spülungen mit solutarmem Lösungsmittel ohne Zusätze,
eine mit Zusätzen angereicherte Spüllösung während der
Spülphase in die erste Kammer einzuleiten. Nach einer längeren Einsatzdauer der Anlage könnte es erforderlich sein,
den Trennungsprozeß abzustellen und für die Dauer von
einem oder mehreren Spülintervallen eine Reinigung mit
bestimmten Zusätzen ohne ein solutarmes Lösungsmittel
vorzunehmen. Für einen solchen Fall kann ebenfalls die
an die Spülleitung angeschlossene Dosiereinrichtung verwendet werden. Nach einer derartigen Reinigungsbehandlung
empfiehlt es sich, vor erneuter Aufnahme des Trennungsprozesses die Reinigungslösung aus dem Druckgefäß zu
entfernen.

Für bestimmte Einsatzfälle, bei denen die Spüllösungsmenge in etwa gleich groß bleibt, kann die die Membran
umgehende Spülleitung ein solches Fassungsvermögen besitzen, daß sie eine für eine Spülphase in etwa
erforderliche Spüllösungsmenge aufnimmt.

Bei einer anderen Ausführungsform einer Vorrichtung
zur Durchführung des erfindungsgemäßen Verfahrens kommen
mindestens zwei Druckgefäße zum Einsatz, bei denen erfindungsgemäß die beiden ersten Kammern an eine Verteilerleitungsanordnung angeschlossen sind, und bei denen die
aus den zweiten Kammern austretenden Abflußleitungen
für solutarmes Lösungsmittel in die ersten Kammern der
jeweils anderen Druckgefäße hineingeführt sind, so daß
sich eine wechselseitige Serienschaltung zwischen den
zweiten Kammern und den ersten Kammern der Druckgefäße
ergibt. In der Verteilerleitungsanordnung und den Abflußleitungen sind verschiedene Förder-, Dosier- und
Umschaltelemente vorgesehen, die wiederum mit einer
Steuer- und Regelungsanordnung in Verbindung stehen,
welche die Prozeß- und Spülphasen zwischen den Druckgefäßen umschaltet, so daß etwa für die Dauer einer Prozeßphase in einem Druckgefäß eine Spülphase in dem jeweils
anderen Druckgefäß eingestellt wird und dabei zumindest
ein Teil des im erstgenannten Druckgefäß gewonnenen solutarmen Lösungsmittel als Spüllösung in die erste Kammer geleitet und nach der Spülung der verbrauchsgemäßen
Bestimmung zugeführt wird. Bei dieser Ausführungsform
kann das solutarme Lösungsmittel aus der zweiten Kammer
entweder direkt ohne eine Erhöhung des Lösungsmitteldrucks zur Spülung in die entsprechende zweite Kammer
eingeleitet werden, oder es kann über eine entsprechende
Druckerhöhungspumpe in dieser Leitung das Lösungsmittel
auf einen geeigneten Spüllösungsdruck angehoben werden.

-16-

Auch ist von dieser Ausführungsform die Möglichkeit umfaßt, nur einen Anteil des im jeweils anderen Druckgefäß gewonnenen solutarmen Lösungsmittel zur Spülung und den verbleibenden Teil unmittelbar einem Gebrauch zuzuführen. Die während des Spülvorgangs und der Auflösung der besagten Substanzen stattfindende geringe Aufsalzung ist praktisch vernachlässigbar.

Bei einer weiteren Variante einer Vorrichtung zur Durchführung des erfindungsgemäßen Verfahrens kommt ein Druckgefäß zum Einsatz, dessen Gefäßinnenraum durch eine symmetrische homogene Membran unterteilt ist, um so die beiden Kammern, wie bei den vorstehenden Varianten beschrieben, zu bilden. Bei dieser Vorrichtung kann die Spüllösung in beiden Richtungen durch die Membran gefördert werden, wobei dann, wenn beispielsweise nach abgeschalteter Prozeßphase eine Spülung in Gegenströmungsrichtung erfolgt, eine gesonderte Spülleitung, wie bei den vorstehend beschriebenen Varianten nicht erforderlich ist, solange es genügt, mit dem solutarmen Lösungsmittel,das während der Prozeßphase gewonnen wurde, den Spülvorgang auszuführen. Bei einer bevorzugten Ausführungsform mit einer homogenen Membran ist in der Abflußleitung für solutarmes Lösungsmittel eine Umschalt- und Fördereinrichtung vorgesehen, welche den Abfluß des Lösungsmittels bei Beginn der Spülphase unterbricht und einen entsprechenden Druck auf das in der zweiten Kammer befindliche Lösungsmittel ausübt, um es im Gegenstrom durch die Membran hindurchzufördern und dabei den Spülvorgang ablaufen zu lassen. Dabei kann die in der ersten Kammer noch befindliche solutreiche Lösung entweder über den Kondensatabfluß oder ein separates Ablaßmittel verdrängt werden.

-17-

Eine symmetrische, homogene Membran in einem Druckgefäß
eröffnet auch die Möglichkeit für eine Zusammenschaltung
einer Reihe   . solcher Druckgefäße. Die Prozeßphase
.im     jeweiligen Druckgefäß läßt sich dann so einstellen, daß die Ausfällungen und Ablagerungen bei wechselseitigem Betrieb zwischen den beiden Kammern bis zu
einem vorbestimmten Grenzwert gestattet werden, um dann in einer
Spülphase, bei der das solutarme Lösungsmittel die Membran
ebenfalls in beiden Richtungen durchströmt, die entstandenen Ausfällungen und Ablagerungen wieder aufzulösen.

Einige Ausführungsbeispiele der Erfindung werden nachstehend anhand von Zeichnungen näher erläutert. Es zeigen:

Fig. 1 eine schematische Darstellung einer Vorrichtung
        zur Trennung einer solutenthaltenden Lösung mittels Gegenosmose nach den Merkmalen der Erfindung,

Fig. 2 eine abgewandelte Ausführungsform der Vorrichtung
        gemäß Fig. 1,

Fig. 3 eine schematische Darstellung einer Vorrichtung
        zur Trennung einer solutenthaltenden Lösung mittels Gegenosmose, bei welcher zwei Gegenosmose-
        Druckgefäße für einen wechselweisen Betrieb zusammengeschaltet sind,

Fig. 4 eine Variante einer Vorrichtung zur Trennung
        einer solutenthaltenden Lösung mittels Gegen-
        osmose, bei welcher eine homogene symmetrische
        Gegenosmosemembran Verwendung findet,

Fig. 5 eine schematische Darstellung einer abgewandelten
        Ausführungsform der in Fig. 4 gezeigten Vorrichtungsvariante.

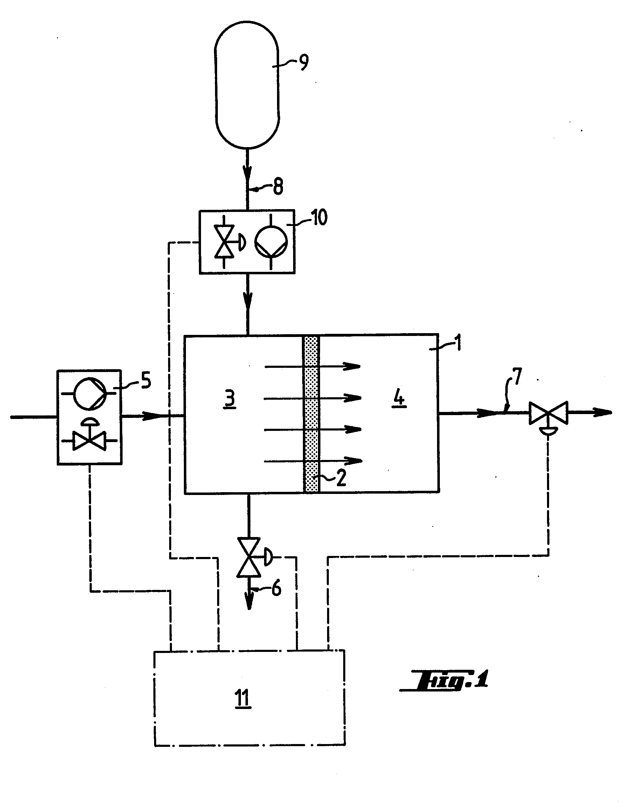

Die in Fig. 1 abgebildete Vorrichtung weist ein Druckgefäß 1 auf, das in seinem Inneren von einer semipermeablen Membran 2 zur Bildung einer ersten Kammer 3 und einer zweiten Kammer 4 unterteilt ist. Die schematische Darstellung der Membran 2, wie auch die der gesamten Vorrichtung gibt keine konstruktive Ausführung wieder,sondern soll nur die Funktionsprinzipien deutlich machen. Dem Fachmann auf dem Gebiet der Gegenosmose sind die oft als Permeatoren bezeichneten Osmoseelemente bekannt, deren Membranen als Hohlfasermembran,Spiralwickelmembran usw. ausgeführt sein können. Bei der abgebildeten Vorrichtung dient die erste Kammer 3 für die Zufuhr von solutenthaltender Lösung, welche beim Durchtritt durch die Membran 2 in ein solutarmes Lösungsmittel, das sich in der Kammer 4 ansammelt und ein solutreiches Konzentrat, getrennt wird, welches über einen in der ersten Kammer vorgesehenen Konzentratabfluß 6 ausgetragen werden kann. Der für die Gegenosmose erforderliche erhöhte Druck in der Kammer 3 wird durch eine Fördereinrichtung 5 am einlaßseitigen Ende der Kammer erzeugt. Diese Fördereinrichtung ist mit einer Pumpe und entsprechenden Ventilmitteln ausgestattet. Das solutarme Lösungsmittel kann aus der zweiten Kammer 4 über eine Abflußleitung 7 zur Weiterbehandlung oder unmittelbar zur gebrauchsgemäßen Bestimmung abgeführt werden. Eine Steuer- und Regelungsanordnung 11 steht mit der Fördereinrichtung 5, dem Konzentratabfluß 6 sowie der Abflußleitung 7 in Verbindung, um die an diesen Aggregaten je nach dem Verfahrensablauf erforderlichen Schalt- und Regulierungsvorgänge auszuführen.

In die erste Kammer 3 mündet gemäß Fig. 1 eine Spülleitungsanordnung 8, welche einen Spüllösungsvorrat 9 sowie ein Förder- und Dosieraggregat 10 umfaßt und dazu dient, eine Spüllösung aus dem Spüllösungsvorrat in die erste Kammer 3, beispielsweise bei Beginn der Spülphase, einzuleiten. Diese Spüllösung durchströmt die semipermeable Membran 2 in der durch die Pfeile angegebenen Richtung, welche der Richtung entspricht, in der der Trennungsprozeß stattfindet, und löst dabei in der ersten Kammer 3 sowie in und an der Membran 2 vorhandene Ausfällungen und Ablagerungen durch Spülung auf. Das Förder- und Dosieraggregat 10 ist ebenfalls an die Steuer- und Regelungsanordnung 11 angeschlossen und wird von dieser entsprechend dem gewünschten Verfahrensablauf angesteuert. Als Förderelement kann dieses Aggregat 10 eine Pumpe und zur Dosierung geeignete Ventilmittel aufweisen. Auch könnte eine Dosierpumpe beide Funktionen erfüllen.

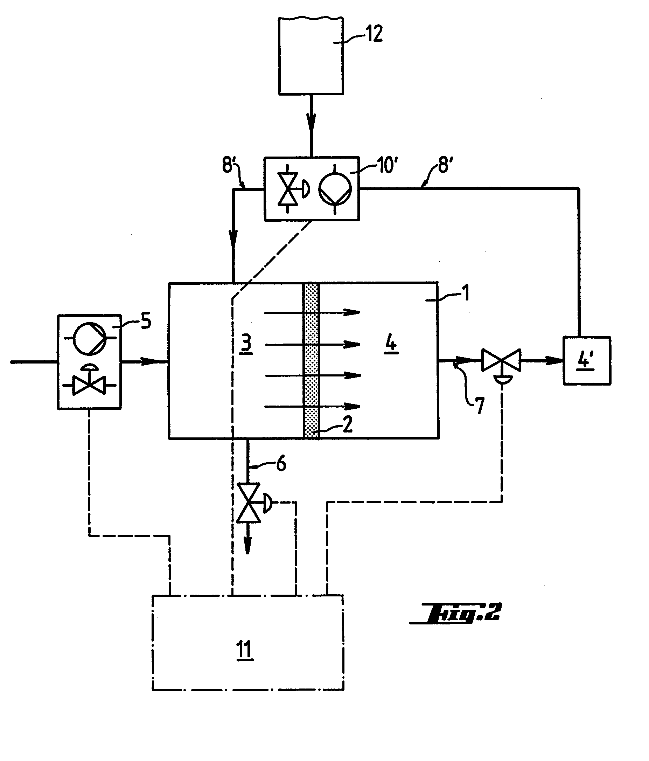

Bei der in Fig. 2 gezeigten Vorrichtungsvariante ist eine Spülleitungsanordnung 8', die ein Förder- und Dosieraggregat 10' umfaßt, derart angeordnet, daß sie als Umgehung der semipermeablen Membran 2 das Spülgefäss 4' mit der ersten Kammer 3 verbindet. Bei entsprechender Betätigung des Förder- und Dosieraggregats 10' durch die Steuer- und Regelungsanordnung 11 kann während der Prozeßphase gewonnenes solutarmes Lösungsmittel aus der Spülkammer 4' für die Spülung in die erste Kammer 3 ein- und damit der semipermeable Membran 2 zugeleitet werden. Falls eine Beimischung von Zusätzen zu dem solutarmen Lösungsmittel in der Spülleitungsanordnung 8' gewünscht wird, kann dies über eine Dosiereinrichtung 12, die in die Spülleitungsanordnung 8' einmündet, kontinuierlich während der Spülphase oder in bestimmten Intervallen, je nach dem zu wählenden Verfahrensablauf, geschehen. Das Förder- und Dosieraggregat 10' steht, wie auch die im Zusammenhang mit Fig. 1 beschriebene Fördereinrichtung 5, der Konzentratabfluß 6 und die Abflußleitung 7 mit der Steuer- und Regelungsanordnung 11 in Verbindung und wird von dieser entsprechend angesteuert.

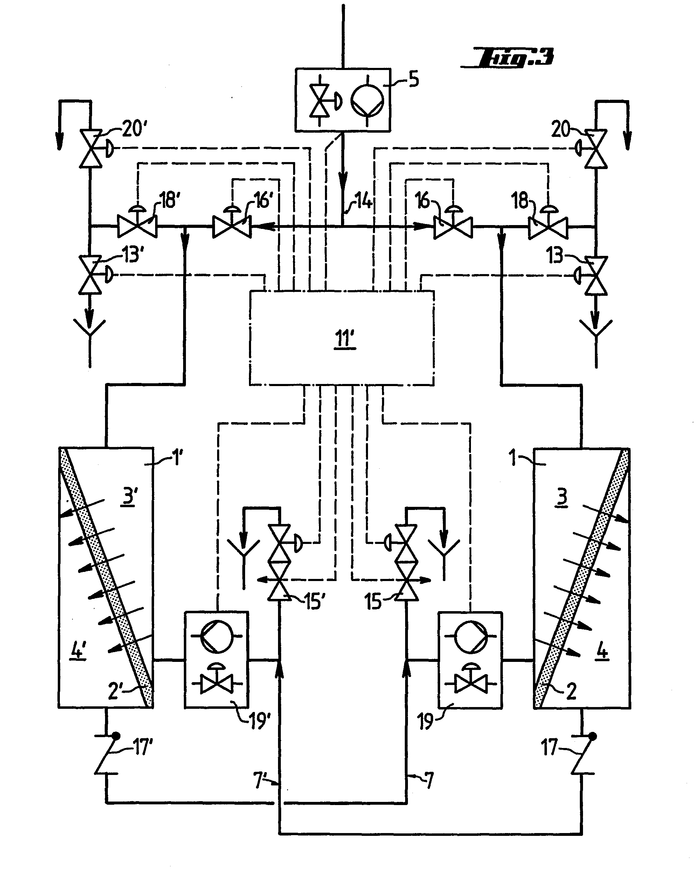

Die Darstellung in Fig. 3 zeigt eine Vorrichtung mit zwei Druckgefäßen 1,1', deren jeweils erste Kammern 3,3' an eine Verteilerleitungsanordnung 14 angeschlossen sind und über die Fördereinrichtung 5 mit·solutenthaltender Lösung beschickt werden. Während der Prozeßphase erfolgt die Trennung an den Membranen .2, 2' in den Druckgefäßen 1,1', das solutarme Lösungsmittel in der zweiten Kammer 4,4'wird über die jeweilige Abflußleitung 7,7',die je eine Rückschlagklappe 17,17' enthält, aus dem Druckgefäß herausgeführt und kann dann in die jeweils erste Kammer 3,3' eingeführt werden, um dort als Spüllösung zu dienen und über 18, 18' und 20, 20' dem Verbraucher zugeleitet zu werden. Eine Steuer- und Regelungsanordnung 11' ist vorgesehen, um in der Verteilerleitungsanordnung 14 vorgesehene Umschaltventile 16,16',weitere Ventil-Schaltmittel 18,18', 20, 20', die Fördereinrichtung 5, die Druckhalte- und Absperrvorrichtung 15,15' und gegebenenfalls eine Druckerhöhungspumpe 19,19' sowie Ablaßventile 13, 13' je nach dem gewünschten Verfahrensablauf anzusteuern bzw. zu regulieren.Als grundsätzliche Betriebsweise schaltet die Steuer- und Regelungsanordnung 11'dann, wenn in einem der beiden
Druckgefäße 1,1', beispielsweise im Druckgefäß 1 eine
Prozeßphase stattfindet, das andere Druckgefäß 1' auf
eine Spülphase, so daß das im Druckgefäß 1 bzw. der
zweiten Kammer 4 gewonnene solutarme Lösungsmittel über
die Abflußleitung 7 in die erste Kammer 3' eingeleitet
wird, um dort den Spülvorgang auszuführen und über die
Absperrvorrichtung 18', 20' dem Verbrauch zugeleitet zu werden. Am Ende der Prozeßphase im Druckgefäß 1
schaltet die Steuer- und Regelungsanordnung 11' die
Spülphase im Druckgefäß 1' ab und die Prozeßphase ein,
daß nun das Druckgefäß 1 mit dem in der zweiten Kammer 4'
gewonnenen solutarmen Lösungsmittel über die Leitung 7'
gespült wird. Nach dem Spülvorgang im Druckgefäß 1
strömt das immer noch solutarme Lösungsmittel über
die Leitung 7 und die Druckhalte- und Absperrvorrichtung 18, 20 zum Verbrauch.

Damit bei Beginn der Spülphase die in den jeweiligen
ersten Kammern 3,3' enthaltene solutreiche Lösung durch
die einströmende Spüllösung verdrängt werden kann,
sind in der Verteilerleitungsanordnung 14 Ventil-
schaltmittel 18,18' und Ablassventil 13,13' vorgesehen, welche die verdrängte solutreiche Lösung einem
Ablauf zuführen. Bei dieser Ausführungsform kann die
jeweils in einem Druckgefäß stattfindende Spülung
ohne Druckerhöhung des solutarmen Lösungsmittels oder
bei erhöhtem Spüllösungsdruck stattfinden. In
Fig. 3 ist eine Druckerhöhungspumpe 19,19' in der
jeweiligen Abflußleitung 7,7' dargestellt. Auch diese
Druckerhöhungspumpen werden über die Steuer- und Regelungsanordnung 11 angesteuert.

-22-

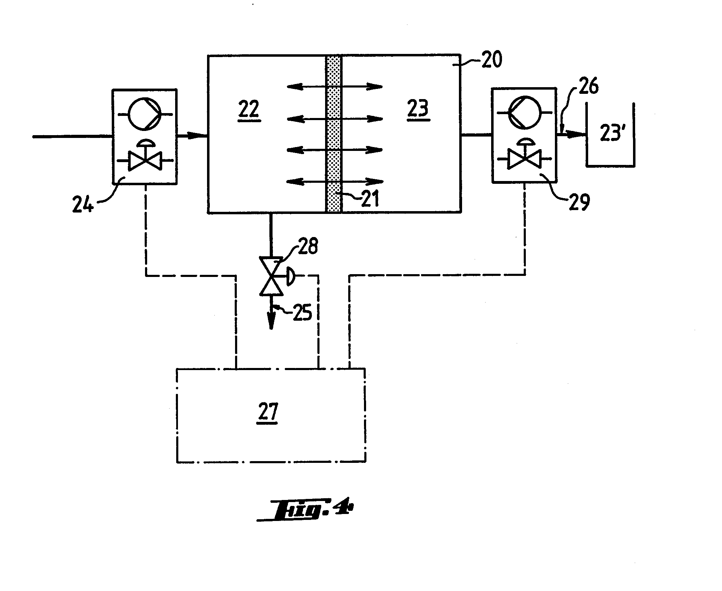

Bei der Ausführungsform gemäß Fig. 4 ist ein Druckgefäß
20 durch eine symmetrische homogene Membran 21 in eine
erste Kammer 22 für eine solutenthaltende Lösung bzw.
ein Konzentrat dieser Lösung sowie eine zweite Kammer 23 und ein Reservoir 23' für solutarmes Lösungsmittel unterteilt. Die Doppelpfeile bezeichnen die Durchlaßrichtungen der Membran 21.
Bei dieser Ausführungsvariante ist keine Spülleitung ,
vorgesehen, sondern die Spülung erfolgt durch Erzeugen
eines Gegenstroms zur Strömungsrichtung in der Prozeßphase, wobei aus der zweiten Kammer 23 solutarmes Lösungsmittel durch die Membran gedrückt wird und dabei
der Spülvorgang stattfindet. Eine Vedrängung des am Ende der Prozeßphase in der ersten Kammer 22 befindlichen
solutreichen Konzentrats bzw. der solutenthaltenden
Lösung kann durch eine Betätigung eines Schaltelements
28 im Konzentratabfluß 25 abgeleitet werden. Während
die Fördereinrichtung 24 zur Zufuhr von solutenthaltender Lösung zur ersten Kammer 22 wie bei den bislang beschriebenen Ausführungsbeispielen aufgebaut sein kann,
ist die Abflußleitung 26 mit einer zusätzlichen Umschalt-
und Fördereinrichtung 29 versehen, um das solutarme Lösungsmittel aus dem Reservoir 23' unter Druck durch die Kammer
23 und die Membran 21 zu fördern. Sämtliche Schalt- und Regelfunktionen werden ähnlich wie bei den vorstehend beschriebenen Ausführungsbeispielen von einer Steuer- und
Regelungsanordnung 27 ausgeführt.

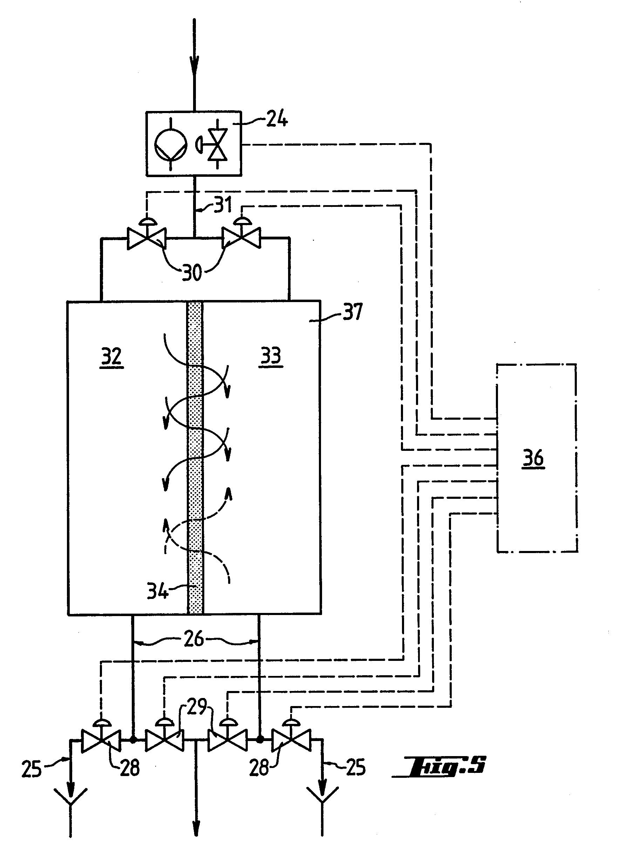

Gemäß Fig. 5 unterteilt eine homogene symmetrische Membran
34 ein Druckgefäß 37 in eine Kammer 32 und eine Kammer 33.
Je nach der prozessbedingten Ansteuerung wird über eine
Steuer- und Regelungsanordnung 36 jede der beiden Kammern
im Druckgefäss 37 als erste oder als zweite Kammer eingesetzt, da die Membran 34, wie gesagt, in ——————

0126714

-23-

beiden Richtungen durchlässig ist. Eine Verteilerleitungsanordnung 31 mit entsprechenden Schaltelementen 30 ist zwischen eine Fördereinrichtung 24 zur Zufuhr der solutreichen Lösung und der Zuleitung zu den
jeweiligen Kammern vorgesehen. Ferner sind in den Abflußleitungen 26 der Kammern 32 und 33
Umschalteinrichtungen 29 vorgesehen sowie
im Konzentratabfluß 25 je ein Schaltelement 28. Wenn
die in Fig. 5 linke Kammer als erste Kammer betrieben
wird, kann das sich in der in Fig. 5 rechten Kammer
ansammelnde solutarme Lösungsmittel über die Abflußleitung 26 bei entsprechend betätigter Umschalt- und
Fördereinrichtung 29 abfließen. Entsprechendes gilt
für den Betrieb der in Fig. 5 rechten Kammer als erste
Kammer während der Prozeßphase, wobei die in Fig. 5
linke Kammer als zweite, das solutarme Lösungsmittel
aufnehmende Kammer dient. Ein Verdrängen des zu Beginn des Spülvorgangs in jeweils einer Kammer befindlichen solutreichen Konzentrats bzw. der solutenthaltenden Lösung kann über Ablaßmittel 28 erfolgen. Die in Fig. 5
gezeigte Ausführungsvariante eignet sich besonders für
einen Serienbetrieb, wie er beispielsweise durch den
prinzipiellen Schaltungsaufbau gemäß Fig. 3 dargestellt
ist.

Patentansprüche

1. Verfahren zur Trennung einer solutenthaltenden Lösung mittels Gegenosmose in ein solutreiches Konzentrat und ein solutarmes Lösungsmittel, insbesondere ohne konstante chemische Vorbehandlung, dadurch g e k e n n - z e i c h n e t , daß ein im Verlauf des Trennungsprozesses auf seiten der solutenthaltenden Lösung bzw. des solutreichen Konzentrats stattfindendes Ausfällen und Ablagern löslicher bzw. schwerlöslicher Stoffe während einer Prozessphase vorbestimmter Dauer gestattet wird und dass die dann vorhandenen Ausfällungen und Ablagerungen in einer Spülphase durch eine Spülung mit einer Spüllösung zumindest größtenteils aufgelöst werden.

2. Verfahren zur Behandlung von Störsubstanzen in Lösungen, wie Ausfällungen löslicher Stoffe aus Lösungen, insbesondere bei der Trennung von solutenthaltenden Lösungen ohne konstante chemische Vorbehandlung mittels Gegenosmose in ein solutreiches Konzentrat und ein solutarmes Lösungsmittel, dadurch gekennzeichnet, daß ein im Verlauf des Trennungsprozesses auf seiten der solutenthaltenden Lösung bzw. des solutreichen Konzentrats stattfindendes Ausfällen und Ablagern löslicher Stoffe während einer Prozeßphase bis zu einem oberen Eindickungsgrenzwert bzw. einer oberen Ablagerungsdichte gestattet wird und daß dann vorhandene Ausfällungen bzw. Ablagerungen in einer Spülphase durch eine Spülung mit einer Spüllösung bis zu einer unteren Ablagerungsdichte aufgelöst werden.

3. Verfahren nach Anspruch 1 oder 2, dadurch gekennzeichnet, daß die Spülphase in den fortlaufenden Trennungsprozeß integriert wird.

4. Verfahren nach Anspruch 3, dadurch gekennzeichnet, daß die Spülphase dem fortlaufenden Trennungsprozeß periodisch zugeschaltet wird.

5. Verfahren nach einem der Ansprüche 1 bis 4, dadurch gekennzeichnet, daß in der Spülphase die Spüllösung in der gleichen Strömungsrichtung bewegt wird wie der Strom der solutenthaltenden Lösung bzw. das solutarme Lösungsmittel während des Trennungsprozesses.

6. Verfahren nach Anspruch 1 oder 2, dadurch gekennzeichnet, daß für die Dauer der Spülphase der Trennungsprozeß unterbrochen und gegebenenfalls die solutenthaltende Lösung bzw. das solutreiche Konzentrat durch die Spüllösung verdrängt wird.

7. Verfahren nach Anspruch 6, dadurch gekennzeichnet, daß in der Spülphase die Spüllösung in der entgegengesetzten Richtung zu der- des Stromes der solutenthaltenden Lösung bzw. des solutarmen Lösungsmittels während des Trennungsprozesses bewegt wird.

8. Verfahren nach einem der Ansprüche 1 bis 7, dadurch gekennzeichnet, daß die Spülphase in etwa von gleicher Dauer ist wie die Prozeßphase.

9. Verfahren nach einem der Ansprüche 3 bis 7, dadurch gekennzeichnet, daß die Spülphase wesentlich kürzer ist als die Prozeßphase und vorzugsweise etwa 1/10 der Dauer der Prozeßphase beträgt und daß die Intervalle für beide Phasen einstellbar sind.

10. Verfahren nach einem der Ansprüche 1 bis 9, dadurch gekennzeichnet, daß in der Spülphase zur Spülung eine gegebenenfalls mit Zusätzen aufbereitete solutenthaltende Lösung verwendet wird.

11. Verfahren nach einem der Ansprüche 1 bis 9, dadurch gekennzeichnet, daß in der Spülphase zur Spülung ein gegebenenfalls mit Zusätzen aufbereitetes solutarmes resp. reines Lösungsmittel verwendet wird.

12. Verfahren nach einem der Ansprüche 1 bis 9, dadurch gekennzeichnet, daß in der Spülphase zur Spülung ein gegebenenfalls mit Zusätzen aufbereitetes solutreiches Konzentrat verwendet wird.

13. Verfahren nach einem der Ansprüche 10 bis 12, dadurch gekennzeichnet, daß als Zusätze anorganische und/oder organische Säuren oder Basen, Komplexbildner, Sequestierungsmittel, Dispergiermittel, Emulgatoren, Desinfektionsmittel, Biostatica, Detergenzien, enzymatische Abbauvermittler, organische Lösungsmittel, Filmbildner, Polyamine oder Polyamide einzeln oder zu mehreren verwendet werden.

- 4 -

14. Verfahren nach einem der Ansprüche 1 bis 13, dadurch gekennzeichnet, daß die Lösekraft der Spüllösung vorgängig ihrer Verwendung durch Enthärtung, Entkationisierung oder Entsalzung mittels Ionenaustausch erhöht wird.

15. Verfahren nach einem der Ansprüche 1 bis 14, dadurch gekennzeichnet, daß ein Teil oder die ganze Spüllösung durch ein mit Protonen beladenes Ionenaustauschharzbett geleitet wird, das während des Trennungsprozesses elektrolytisch oder mit Säure regeneriert wird.

16. Verfahren nach einem der Ansprüche 1 bis 15, dadurch gekennzeichnet, daß die in der Spülphase verwendete Spüllösung bis auf eine Temperatur von etwa 80°C erwärmt wird.

17. Verfahren nach einem der Ansprüche 1 bis 16, dadurch gekennzeichnet, daß insbesondere nach gegebenen Parametern der für die Gegenosmose zum Einsatz gelangenden Elemente und nach den jeweiligen Merkmalen der solutenthaltenden Lösung die Dauer der Prozeßphase ermittelt und dementsprechend die Dauer der Spülphase festgelegt wird.

18. Verfahren zur Aufbereitung von Rohwasser, wie Abwasser, Brackwasser, Meerwasser und dgl. zu Trinkwasser, wiederverwendbarem Prozeßwasser und dgl., insbesondere ohne konstante chemische Vorbehandlung mittels Gegenosmose, wobei Rohwasser in ein solutreiches Konzentrat und ein solutarmes Reinwasser getrennt wird, dadurch g e k e n n z e i c h n e t , daß ein im Verlauf des Trennungsprozesses rohwasser- bzw. konzentratseitig stattfindendes Ausfällen und Ablagern löslicher Stoffe für die Dauer einer Prozeßphase bis zu einem oberen Aufkonzentrations- bzw. Eindickungsgrenzwert resp. einer oberen Ablagerungsdichte gestattet wird und daß die dann vorhandenen Ausfällungen resp. Ablagerungen in einer Spülphase durch eine Spülung mit solutarmem Reinwasser zumindest größtenteils aufgelöst werden.

19. Verfahren nach Anspruch 18, dadurch gekennzeichnet, daß zumindest ein Teil des in der besagten Prozeßphase gewonnenen solutarmen Reinwassers für eine Spülung verwendet und dann ohne weitere Nachbehandlung der verbrauchsgemäßen Bestimmung zur Verfügung gestellt wird.

20. Verfahren nach Anspruch 18 oder 19, dadurch gekennzeichnet, daß das gesamte, während der besagten Prozeßphase gewonnene solutarme Reinwasser für eine Spülung in einer gleichzeitig stattfindenden Spülphase verwendet wird und daß vor der Spülung gegebenenfalls der Wasserdruck erhöht wird.

21. Vorrichtung zur Durchführung des Verfahrens nach einem der Ansprüche 1, 2 oder 18, umfassend mindestens ein Druckgefäß (1) mit einer seinen Gefäßinnenraum unterteilenden semipermeablen Membran (2) zur Bildung einer ersten Kammer (3) für eine solutenthaltende Lösung bzw. ein Konzentrat dieser Lösung sowie einer zweiten Kammer (4) für solutarmes Lösungsmittel, wobei die Membran von der ersten zur zweiten Kammer durchlässig ist, ferner eine an die erste Kammer angeschlossene Fördereinrichtung (5) zur Zufuhr solutenthaltender Lösung unter einem vorbestimmten Druck , einen aus der ersten Kammer herausgeführten Konzentratabfluß (6) sowie eine Abflußleitung (7) für solutarmes Lösungsmittel an der zweiten Kammer, g e - k e n n z e i c h n e t durch eine in die erste Kammer (3) einmündende Spülleitungsanordnung (8) mittels welcher die genannte Spüllösung während der Spülphase aus einem Spüllösungsvorrat (9) in diese erste Kammer einleitbar ist, ein in der Spülleitungsanordnung vorgesehenes Förder- und Dosieraggregat (10) zur Mengen- und Druckdosierung der einzuleitenden Spüllösung und eine zumindest mit dem Förder- und Dosieraggregat (10) in Verbindung stehende Steuer- und Regelungsanordnung (11) zur Einstellung der Dauer und gegebenenfalls des Intervalls der Spülphase in Relation zu den sonstigen genannten Verfahrensabläufen.

22. Vorrichtung nach Anspruch 21, dadurch gekennzeichnet, daß die Spülleitungsanordnung (8') mit dem Förder- und Dosieraggregat (10') die semipermeable Membran (2) umgehend zwischen der zweiten und der ersten Kammer (4,3) vorgesehen ist, daß an die Spülleitungsanordnung eine Dosiereinrichtung (12) für Spüllösungszusätze angeschlossen ist und daß die erste Kammer mit einer steuermittelbetätigten Austrittsleitung (13) zum Austrag von mit Beginn der Spülphase aus dieser Kammer verdrängter solutreicher Lösung verbunden ist.

23. Vorrichtung nach Anspruch 22, dadurch gekennzeichnet, daß die die Membran (2) umgehende Spülleitungsanordnung (8) ein entsprechendes Fassungsvermögen besitzt, um eine während einer Spülphase in etwa erforderliche Spüllösungsmenge aufnehmen zu können.

24. Vorrichtung, insbesondere nach Anspruch 21, zur Durchführung des Verfahrens nach den Ansprüchen 3, 5, 6, 8 und 19 mit mindestens zwei Druckgefäßen (1,1'), dadurch gekennzeichnet, daß jeweils die ersten Kammern (3,3') der Druckgefäße an eine Verteilerleitungsanordnung (14) für die solutenthaltende Lösung angeschlossen sind, daß die aus den zweiten Kammern (4,4') der Druckgefäße austretenden Abflußleitungen (7,7') für das solutarme Lösungsmittel in die ersten Kammern (3',3) der jeweils anderen Druckgefäße (1',1) hineingeführt sind, daß in der Verteilerleitungsanordnung (14) und den Abflußleitungen (7,7') Förder-, Dosier- und Umschaltelemente (15,15';16,16';17,17';18,18') vorgesehen sind und diese Elemente mit einer Steuer- und Regelungsanordnung (11) in Verbindung stehen, welche die Prozeß- und Spülphasen zwischen den Druckgefäßen (1,1') wechselweise umschaltet, derart, daß etwa für die Dauer einer Prozeßphase im einen Druckgefäß (1) eine Spülphase im anderen Druckgefäß (1') eingestellt und dabei zumindest ein Teil des im erstgenannten Druckgefäß gewonnenen solutarmen Lösungsmittels als Spüllösung in die erste Kammer (3') des auf die Spülphase eingestellten Druckgefäßes (1') eingeleitet und nach erfolgter Spülung der verbrauchsgemäßen Bestimmung zugeführt wird.

25. Vorrichtung nach Anspruch 24, dadurch gekennzeichnet, daß in jeder Abflußleitung (7,7') vor ihrem Eintritt in die ersten Kammern (3,3') der jeweiligen Druckgefäße (1,1') eine ebenfalls an die Steuer- und Regelungsanordnung (11) angeschlossene Druckerhöhungspumpe (19,19') vorgesehen ist.

26. Vorrichtung nach einem der Ansprüche 22, 24 oder 25, dadurch gekennzeichnet, daß jede erste Kammer (3,3') mit einer steuermittelbetätigten Austrittsleitung (13,13') zum Austragen von mit Beginn der Spülphase aus dieser Kammer verdrängter solutreicher Lösung verbunden ist.

27. Vorrichtung zur Durchführung des Verfahrens nach einem der Ansprüche 1, 2 oder 18, umfassend mindestens ein Druckgefäß (20) mit einer seinen Gefäßinnenraum unterteilenden symmetrischen homogenen Membran (21) zur Bildung einer ersten Kammer (22) für eine solutenthaltende Lösung bzw. ein Konzentrat dieser Lösung sowie einer zweiten Kammer (23) und einem Reservoir (23') für solutarmes Lösungsmittel, ferner eine an die erste Kammer angeschlossene Fördereinrichtung (24) zur Zufuhr solutenthaltender Lösung unter einem vorbestimmten Druck und einen aus dieser ersten Kammer herausgeführten Konzentratabfluß (25) sowie ein Abflußleitungsmittel (26) für solutarmes Lösungsmittel an der zweiten Kammer, dadurch g e k e n n z e i c h n e t , daß in der Abflußleitung (26) eine Umschalt- und Fördereinrichtung (29) vorgesehen ist und daß diese, die Fördereinrichtung (24) sowie ein Schaltelement (28) im Konzentratabfluß (25) an eine Steuer- und Regelungsanordnung (27) angeschlossen sind, welche zur Einleitung der Spülphase die Umschalt- und Fördereinrichtung (29) sowie die anderen genannten Förder- und Schaltmittel entsprechend betätigt, um solutarmes Lösungsmittel aus dem Reservoir (23') gegebenenfalls unter Verdrängung der solutreichen Lösung über den Konzentratabfluß (25) im Gegenstrom zur Strömungsrichtung während der Prozeßphase durch die Membran (21) hindurch zu spülen.

28. Vorrichtung zur Durchführung des Verfahrens nach einem der Ansprüche 1, 2 oder 18, umfassend mindestens ein Druckgefäß (37) mit einer seinen Gefäß-

- 9 -

innenraum unterteilenden symmetrischen homogenen Membran (34) zur Bildung jeweils einer ersten Kammer (32 oder 33) für eine solutenthaltende Lösung bzw. ein Konzentrat dieser Lösung sowie jeweils einer zweiten Kammer (33 oder 32) für solutarmes Lösungsmittel und umgekehrt, ferner eine an die jeweilige erste Kammer angeschlossene Fördereinrichtung (24) zur Zufuhr solutenthaltender Lösung unter einem vorbestimmten Druck und einen aus dieser jeweils ersten Kammer herausgeführten Abflussleitung (26) für Konzentrat und solutarmes Lösungsmittel an der jeweils zweiten Kammer, dadurch g e k e n n z e i ch - n e t , daß zwischen der Fördereinrichtung (24) und der jeweils ersten Kammer (32 oder 33) eine mit Schaltelementen (30) versehene Verteilerleitungsanordnung (31) vorgesehen ist, daß in der Abflußleitung (26) der jeweiligen zweiten Kammer (33 oder 32) eine Umschalteinrichtung (29) vorgesehen ist und daß diese, die Fördereinrichtung (24), je ein Schaltelement (28) im Konzentratabfluß (25) sowie die Schaltelemente (30) an eine Steuer- und Regelungsanordnung (36) angeschlossen sind, welche eine Umschaltung der Prozeßphasen zwischen den jeweils ersten Kammern wechselweise ansteuert und zur Einleitung der Spülphase die Umschalteinrichtung (29) sowie die anderen genannten Förder- und Schaltmittel entsprechend betätigt, um solutarmes Lösungsmittel aus der jeweils zweiten Kammer (33 oder 32) gegebenenfalls unter Verdrängung der solutreichen Lösung über den Konzentratabfluß (25) im Gegenstrom zur Strömungsrichtung während der jeweiligen Prozeßphase durch die Membran (34) zu spülen.

E

Fig.1

Fig.2

Fig. 3

3/5

0126714

Fig. 4

Fig.5